# EUROPÄISCHE PATENTSCHRIFT

(11) **EP 1 706 433 B1**
(45) Veröffentlichungstag und Bekanntmachung des Hinweises auf die Patenterteilung: **26.08.2009**
(21) Anmeldenummer: 04804706.2
(22) Anmeldetag: 07.12.2004
(51) Int. Cl.: C08F 20/00, C09J 133/06, C09J 7/02

(54) **HITZE-AKTIVIERBARE HAFTKLEBEMASSE**
HEAT-ACTIVATED, PRESSURE-SENSITIVE ADHESIVE MASS
MASSE AUTO-ADHESIVE ACTIVEE PAR CHALEUR

(30) Priorität: 08.01.2004 DE 102004001299
(43) Veröffentlichungstag der Anmeldung: 04.10.2006
(73) Patentinhaber: TESA SE, 20253 Hamburg (DE)
(72) Erfinder: HUSEMANN, Marc, 22605 Hamburg (DE); ZÖLLNER, Stephan, 22043 Hamburg (DE)
(86) Internationale Anmeldenummer: PCT/EP2004/053309
(87) Internationale Veröffentlichungsnummer: WO 2005/066223

(56) Entgegenhaltungen:
- EP-A- 1 308 492
- WO-A-00/39233
- WO-A-90/13420
- WO-A-97/17411

## Beschreibung

Die Erfindung betrifft eine Hitze-aktivierbare Haftklebemasse, ein Verfahren zu deren Herstellung sowie eine Verwendung einer derartigen Hitze-aktivierbaren Haftklebemasse.

Hitze-aktivierbare Haftklebemassen sind bereits seit langem bekannt und werden häufig für industrielle Haftklebeband-Anwendungen eingesetzt. Generell differenziert man zwischen Klebebändern, die bei Raumtemperatur bereits einen Tack haben und bei denen durch Hitzeeinwirkung die Klebkraft ansteigt, und Klebebändern, die bei Raumtemperatur keinen Tack besitzen und Tack und Klebkraft erst bei erhöhten Temperaturen aufbauen. Für Hitze-aktivierbare Haftklebebänder werden sehr häufig Polyacrylat- bzw. Polymethacrylatklebemassen eingesetzt. Diese Polymere besitzen diverse Vorteile gegenüber anderen Elastomeren. Sie sind sehr stabil gegenüber UV-Licht, Sauerstoff und Ozon. Synthetische und Naturkautschukklebemassen enthalten zumeist Doppelbindungen, die diese Klebemassen gegen die vorher genannten Umwelteinflüsse labil machen. Ein weiterer Vorteil von Polyacrylaten ist ihre Transparenz.

Um nun Hitze-aktivierbare Haftklebemassen herzustellen, existieren verschiedene Möglichkeiten. In US 4,045,517 werden Polymerblends aus einem Polyacrylat mit einer niedrigen Glasübergangstemperatur und einem Polymer mit einer hohen Glasübergangstemperatur eingesetzt. Die beschriebenen Haftklebebänder besitzen somit bereits bei Raumtemperatur eine Klebrigkeit.

In JP 88056274-B werden Mischungen aus Polyacrylaten und Nitrilkautschuk als Hitze-aktivierbare Klebemassen eingesetzt.

In US 4,199,646 werden Hitze-aktivierbare Klebebänder beschrieben, die aus Acrylatcopolymeren bestehen, wobei zumindest ein Comonomer enthalten ist, welches nach der Hitze-Aktivierung durch eine funktionelle Gruppe mit einem in der Mischung enthaltenden Harz reagiert und somit durch eine Vernetzung die Hitzebeständigkeit des Klebebandes erhöht.

In US 4,545,843 werden Hitze-aktivierbare Acrylathaftklebemassen für poröse Substrate eingesetzt.

In US 4,880,683 werden Polyacrylate beschrieben, die Hitze-aktivierbar sind und bei einem Temperaturunterschied von 50 °C oberhalb der Glasübergangstemperatur klebrig werden.

In US 5,905,099 werden Hitze-aktivierbare Acrylat- bzw. Methacrylathaftklebemassen beschrieben, die für reflektive Folien eingesetzt werden.

Alle obengenannten Hitze-aktivierbaren Haftklebemassen weisen den Nachteil eines relativ weiten Aktivierungsbereiches auf, d. h. die Klebemassen werden in einem Bereich von größer 15 °C klebrig und sind somit nicht exakt schaltbar. Eine Erklärung hierfür ist der Polymerisationsprozeß, mit dem die Polyacrylate hergestellt wurden. In allen Fällen werden die Hitze-aktivierbaren Polyacrylate bzw. -methacrylate über eine freie radikalische Polymerisation hergestellt mit dem Ergebnis, dass die Polymere eine breite Molekulargewichtsverteilung besitzen. Da die Glasübergangstemperatur von der Polymerkettenlänge abhängig ist, ist die Aktivierungstemperatur in einem weiten Bereich von ca. 10 °C gestreut.

Aufgabe der Erfindung ist es, die Nachteile nach dem Stand der Technik zu beseitigen. Es soll insbesondere eine Haftklebemasse angegeben werden, die einen engen Aktivierungsbereich aufweist. Ferner sollen ein Verfahren zur Herstellung einer solchen Haftklebemasse sowie eine Verwendung einer derartigen Haftklebemasse angegeben werden.

Diese Aufgabe wird durch die Merkmale der Ansprüche 1, 9 und 10 gelöst. Zweckmäßige Ausgestaltungen der Erfindungen ergeben sich aus den Merkmalen der Ansprüche 2 bis 8 und 11.

Nach Maßgabe der Erfindung ist eine Hitze-ativierbare Haftklebemasse vorgesehen, die ein Polymer oder Copolymer aus einer Monomerzusammensetzung umfaßt, die zumindest 50 Gew.-% einer Verbindung der Formel CH₂=C(R₁)(COOR₂) umfaßt, wobei R₁ H oder CH₃ darstellt und R₂ H oder eine Alkylkette mit 1 bis 30 Kohlenstoffatomen darstellt, wobei das Polymer oder Copolymer
eine statische Glasübergangstemperatur von -10 °C bis 120 °C aufweist;
einen Temperaturaktivierungsbereich von 15 °C oder weniger aufweist; und
eine Molekulargewichtsverteilung M_{W}/M_{N} von 2,5 oder weniger aufweist.

Die erfindungsgemäße Haftklebemasse kann durch kontrollierte radikalische Polymerisation erhalten werden. Mittels kontrollierter radikalischer Polymerisation kann somit eine Haftklebemasse mit enger Molekulargewichtsverteilung erhalten werden, die einen engen Aktivierungsbereich aufweist.

Bei der Verbindung der Formel CH₂=C(R₁)(COOR₂) umfaßt, wobei R₁ H oder CH₃ darstellt und R₂ H oder eine Alkylkette mit 1 bis 30 Kohlenstoffatomen darstellt, handelt es sich somit, falls R₂ H darstellt, um Acrylsäure oder Methacrylsäure, und falls R₂ nicht H ist, um einen Acrylsäureester oder Methacrylsäureester.

M_{W} ist das Gewichtsmittel des Molekulargewichtes des Polymers oder Copolymers. M_{N} ist das Zahlenmittel des Molekulargewichtes des Polymers oder Copolymers.

Die erfindungsgemäßen Haftklebemassen sind Hitze-aktivierbare Poly(meth)acrylathaftkleber.

Im folgenden wird die erfindungsgemäße Hitze-aktivierbare Haftklebemasse auch als Haftklebemasse oder Acrylathaftklebemasse bezeichnet. Angaben, die sich auf das Polymer beziehen, gelten auch für das Copolymer und umgekehrt, sofern nicht anders angegeben. Das Polymer oder Copolymer wird im folgenden auch als Poly(meth)acrylat bezeichnet.

Die Erfindung wird nachstehend mit Bezug auf die Zeichnungen ausführlicher beschrieben, von denen
- Fig. 1: ein DSC-Diagramm für eine erste Haftklebemasse des Standes der Technik ist;
- Fig. 2: ein DSC-Diagramm für eine zweite Haftklebemasse des Standes der Technik ist;
- Fig. 3: ein DSC-Diagramm für eine dritte Haftklebemasse des Standes der Technik ist;
- Fig. 4: ein DSC-Diagramm für eine erste erfindungsgemäße Hitze-aktivierbare Haftklebemasse ist;
- Fig. 5: ein DSC-Diagramm für eine zweite erfindungsgemäße Hitz-aktivierbare Haftklebemasse ist; und
- Fig. 6: ein DSC-Diagramm für eine dritte erfindungsgemäße Hitze-aktivierbare Haftklebemasse ist.

### Hitze-aktivierbare Poly(meth)acrylate

Die statische Glasübergangstemperatur eines Polymers wird bevorzugt nach einer Methode von Fox bestimmt (Fox, T.G. Bull. Am. Phys. Soc. (Ser. 2) 1:123 (1956)).

Um eine Hitze-aktivierbare Haftklebemasse herzustellen, muß die statische Glasübergangstemperatur gegenüber konventionellen Acrylathaftklebemassen angehoben werden. Dies kann durch den Einsatz von Monomeren geschehen, die als Homopolymer eine höhere statische Glasübergangstemperatur besitzen oder durch Veränderung der Anteile der Comonomerzusammensetzung.

Um die erfindungsgemäße Hitze-aktivierbare Haftklebemasse gut handhaben zu können, wird bevorzugt eine statische Glasübergangstemperatur in einem Bereich von 0 bis 100 °C gewählt. Bei Temperaturen unterhalb 0 °C werden der Tack und die Klebkraft zu stark, und das Haftklebeband läßt sich nicht mehr gut repositionieren. Dennoch kann es für einige Anwendungen von Vorteil sein, auch Klebebänder mit einer statischen Glasübergangstemperatur von -10 °C einzusetzen. Bei statischen Glasübergangstemperaturen von größer 40 °C wird die Klebkraft bei Raumtemperatur extrem gering, so dass sich diese Klebebänder nicht mehr sicher positionieren lassen. Dennoch existiert in der Industrie auch eine Reihe von Anwendungen, die diese Funktion nicht benötigen, so dass auch Hitze-aktivierbare Haftklebemassen mit einer statischen Glasübergangstemperatur von bis zu 120 °C Anwendung finden.

In einer weiteren bevorzugten Ausführungsform der Erfindung setzt sich die Monomerzusammensetzung, aus der das Copolymer der erfindungsgemäßen Hitze-aktivierbaren Haftklebemasse gebildet wird, folgendermaßen zusammen:
(a1) 10 bis 85 Gew.-% eines Acrylat- oder Methacrylatesters eines nicht-tertiären Alkohols, dessen Homopolymer eine statische Glasübergangstemperatur von 0 °C oder weniger aufweist;
(a2) 0 bis 70 Gew.-% eines Acrylat- oder Methacrylatesters eines Alkohols, dessen Homopolymer eine statische Glasübergangstemperatur von mindestens 50 °C aufweist; und
(a3) 5 bis 50 Gew.-% eines Monomers, das eine polare funktionelle Gruppe trägt.

In einer sehr bevorzugten Ausführungsform werden für (a1) und (a2) Acryl- oder Methacrylmomonere eingesetzt, die aus Acryl- und Methacrylsäureestern bestehen, die Alkylgruppen mit 4 bis 14 Kohlenstoffatomen, bevorzugt 4 bis 9 Kohlenstoffatomen aufweisen. Spezielle Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z. B. Isobutylacrylat, 2-Ethylhexylacrylat, 2-Ethylhexylmethacrylat, Isooctylacrylat, Isooctylmethacrylat.

Weitere unter (a2) einzusetzende Verbindungsklassen sind monofunktionelle Acrylate bzw. Methacrylate von überbrückten Cycloalkylalkoholen, bestehend aus zumindest 6 Kohlenstoffatomen. Die Cycloalkylalkohole können auch substituiert sein, z. B. durch C1-6-Alkyl, Halogen oder Cyano. Spezifische Beispiele sind Cyclohexylmethacrylate, Isobornylacrylat, Isobornylmethacrylate und 3,5-Dimethyladamantylacrylat.

Für (a3) werden in einer bevorzugten Ausführungsform Monomere eingesetzt, die eine polare Gruppe wie Carboxyl, Sulfon- und Phosphonsäure, Hydroxy-, Lactam und Lacton, N-substituiertes Amid, N-substituiertes Amin, Carbamat-, Epoxy-, Thiol-, Ether, Alkoxy-, Cyan- oder ähnliches tragen.

Moderate basische Monomere sind z. B. N,N-Dialkyl substituierte Amide, wie z. B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Weitere besonders bevorzugte Beispiele für (a3) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrylat, Phenoxyethylmethacrylat, 2-Butoxyethylmethacrylat, 2-Butoxyethylacrylat, Cyanoethylmethacrylat, Cyanoethylacrylat, Gycerylmethacrylat, 6-Hydroxyhexylmethacrylat, Vinylessigsäure, Tetrahydrofufurylacrylat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Ausführungsform werden als Monomere (a3) Vinylester, Vinylether, Vinylhalogenide, Vinylidenhalogenide und Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylnitril.

In einer weiteren bevorzugten Ausführungsform werden zu den beschriebenen Comonomeren (a1) bis (a3) Monomere hinzugesetzt, die eine hohe statische Glasübergangstemperatur besitzen. Als Komponenten eigenen sich aromatische Vinylverbindungen, wie z. B. Styrol, wobei bevorzugt die aromatischen Kerne aus C₄ bis C₁₈ bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus diesen Monomeren, wobei diese Aufzählung nicht abschließend ist.

Generell wird durch einen steigenden Anteil eines Monomers, welches als Homopolymer eine hohe statische Glasübergangstemperatur besitzt, die statische Glasübergangstemperatur des gesamten Polymers angehoben, und der Tack sowie die Klebkraft verringern sich bei Raumtemperatur. Durch die Auswahl der Anteile an Monomeren, die als Homopolymer entweder eine niedrige oder hohe Glasübergangstemperatur besitzen, können die Eigenschaften, d. h. die Aktivierungstemperatur eingestellt werden.

Für den Polymerisationsprozeß durch kontrollierte radikalische Polymerisation wird vorzugsweise ein Kontrollreagenz der allgemeinen Formel eingesetzt: 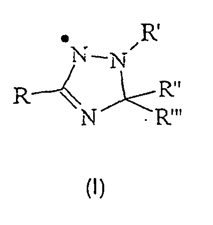 worin
- R, R', R", R''' unabhängig voneinander gewählt sind oder gleich sind und
   - verzweigte und unverzweigte C₁- bis C₁₈-Alkylreste; C₃- bis C₁₈-Alkenylreste; C₃-bis C₁₈-Alkinylreste;
   - H oder C₁- bis C₁₈-Alkoxy;
   - durch zumindest eine OH-Gruppe oder ein Halogenatom oder einen Silylether substituierte C₁- bis C₁₈-Alkylreste; C₃- bis C₁₈-Alkenylreste; C₃- bis C₁₈-Alkinylreste;
   - C₂-C₁₈-Hetero-Alkylreste mit mindestens einem O-Atom und/oder einer NR'-Gruppe in der Kohlenstoffkette;
   - mit zumindest einer Estergruppe, Aminogruppe, Carbonatgruppe, Cyano-, Isocyano- und/oder Epoxidgruppe und/oder mit Schwefel substituierte C₁-C₁₈-Alkylreste, C₃-C₁₈-Alkenylreste, C₃-C₁₈-Alkinylreste;
   - C₃-C₁₂-Cycloalkylreste;
   - C₆-C₁₀-Arylreste; oder
   - Wasserstoff
   darstellen; oder
- R"und R''' miteinander in Form von Spirolverbindungen verbunden sind.

Kontrollreagenzien der Formel (I) bestehen in einer mehr bevorzugten Ausführungsform aus folgenden weiter eingeschränkten Verbindungen:
Halogene sind hierbei bevorzugt F, Cl, Br oder I, stärker bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.

Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.

Beispiele für Alkinyl mit 3 bis 18 Kohlenstoffatomen sind Propinyl, 2-Butinyl, 3-Butinyl, n-2-Octinyl und n-2-Octadecinyl.

Beispiele für Hydroxy-substituierte Alkylreste sind Hydroxypropyl, Hydroxybutyl oder Hydroxyhexyl.

Beispiele für Halogen-substituierte Alkylreste sind Dichlorbutyl, Monobrombutyl oder Trichlorhexyl.

Ein geeigneter C₂-C₁₈-Hetero-Alkylrest mit mindestens einem O-Atom in der Kohlenstoffkette ist beispielsweise -CH₂-CH₂-O-CH₂-CH₃.

Als C₃-C₁₂-Cycloalkylreste dienen beispielsweise Cyclopropyl, Cyclopentyl, Cyclohexyl oder Trimethylcyclohexyl.

Als C₆-C₁₀-Arylreste dienen beispielsweise Phenyl, Naphthyl, Benzyl oder weiter substituiertes Phenyl, wie z. B. Ethyl, Toluol, Xylol, Mesitylen, Isopropylbenzol, Dichlorbenzol oder Bromtoluol.

Die vorstehenden Auflistungen dienen nur als Beispiele für die jeweiligen Verbindungsgruppen und besitzen keinen Anspruch auf Vollständigkeit.

In einer besonders bevorzugten Ausführungsform der Erfindung werden Verbindungen der Formel (Ia) und (Ib) als Kontrollreagenzien eingesetzt.

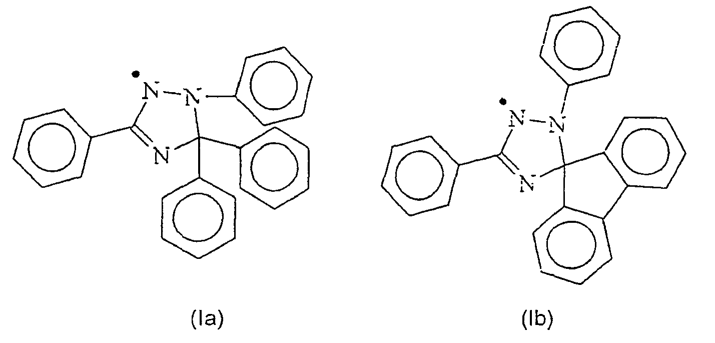

Als weitere kontrollierte radikalische Polymerisationsmethoden können die ATRP, RAFT oder Nitroxid/Tempo-kontrollierte Reaktionen eingesetzt werden. Zur Radikalstabilisierung werden Nitroxide der Formel (IIa) oder (IIb) eingesetzt: 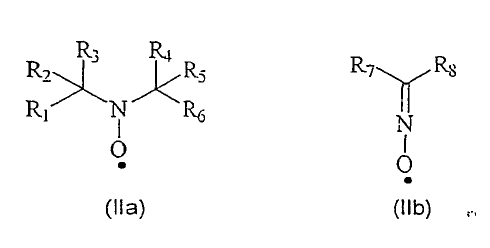 wobei R₁, R₂, R₃, R₄, R₅, R₆, R₇, R₈ unabhängig voneinander folgende Verbindungen oder Atome bedeuten:
i) Halogenide, wie z. B. Chlor, Brom oder Iod;
ii) lineare, verzweigte, cyclische und heterocyclische Kohlenwasserstoffe mit 1 - 20 Kohlenstoffatomen, welche gesättigt, ungesättigt und aromatisch sein können;
iii) Ester -COOR₉, Alkoxide -OR₁₀ und/oder Phosphonate -PO(OR₁₁)₂, wobei R₉, R₁₀ oder R₁₁ für Reste aus der Gruppe ii) stehen.

Die Verbindungen der Formel (IIa) oder (IIb) können auch an Polymerketten jeglicher Art gebunden sein und somit zum Aufbau der Copolymere als Makroradikale oder Makroregler genutzt werden.

Weiterhin können als kontrollierte Regler für die Polymerisation folgende Verbindungen verwendet werden:
- 2,2,5,5-Tetramethyl-1-pyrrolidinyloxyl (PROXYL), 3-Carbamoyl-PROXYL, 2,2-Dimethyl-4,5-cyclohexyl-PROXYL, 3-Oxo-PROXYL, 3-Hydroxylimine-PROXYL, 3-Aminomethyl-ROXYL, 3-Methoxy-PROXYL, 3-t-Butyl-PROXYL, 3,4-Di-t-butyl-PROXYL
- 2,2,6,6-Tetramethyl-1-piperidinyloxypyrrolidinyloxyl (TEMPO), 4-Benzoyloxy-TEMPO, 4-Methoxy-TEMPO, 4-Chlor-TEMPO, 4-Hydroxy-TEMPO, 4-Oxo-TEMPO, 4-Amino-TEMPO, 2,2,6,6-Tetraethyl-1-piperidinyloxyl, 2,2,6-Trimethyl-6-ethyl-1-piperidinyloxyl
- N-tert.-Butyl-1-phenyl-2-methylpropylnitroxid
- N-tert.-Butyl-1-(2-naphtyl)-2-methylpropylnitroxid
- N-tert.-Butyl-1-diethylphosphono-2,2-dimethylpropylnitroxid
- N-tert.-Butyl-1-dibenzylphosphono-2,2-dimethylpropylnitroxid
- N-(1-Phenyl-2-methylpropyl)-1-diethylphosphono-1-methylethylnitroxid
- Di-t-Butylnitroxid
- Diphenylnitroxid
- t-Butyl-t-amylnitroxid

Als weitere Variante kann der RAFT-Prozeß (reversible addition-fragmentation chain transfer) durchgeführt werden. Der Prozeß ist in den Patenten WO 9801478 und WO 9931144 ausführlich beschrieben.

In sehr bevorzugten Ausführungsformen werden Polymerisationsprozesse durchgeführt, wie sie in DE 100 36 801.8 und DE 100 30 217.3 beschrieben sind.

In Verbindung mit den obengenannten kontrolliert radikalisch verlaufenden Polymerisationen werden bevorzugt Initiatorsysteme, die zusätzlich weitere radikalische Initiatoren zur Polymerisation enthalten, insbesondere thermisch zerfallende radikalbildende Azo-oder Peroxo-Initiatoren verwendet. Prinzipiell können hierfür jedoch alle für Acrylate bzw. Methacrylate bekannten üblichen Initiatoren eingesetzt werden. Die Produktion von C-zentrierten Radikalen ist im Houben-Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen. Als einige Beispiele für typische Radikalinitiatoren seien hier genannt: Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol, wobei diese Aufzählung nicht abschließend ist. In einer sehr bevorzugten Ausführungsform wird als radikalischer Initiator 1,1'-Azo-bis-(cyclohexancarbonsäurenitril) (Vazo 88™ der Fa. DuPont) verwendet.

Weiterhin können auch Radikalquellen verwendet werden, die erst unter UV-LichtBestrahlung Radikale freisetzen.

Als weitere kontrollierte Polymerisationsmethode kann die Atom Transfer Radical Polymerization (ATRP) eingesetzt werden, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Cu-, Ag- oder Au-Komplexe [EP 0 824 111; EP 0 826 698; EP 0 824 110: EP 0 841 346; EP 0 850 957] eingesetzt werden. Die unterschiedlichen Möglichkeiten der ATRP sind ferner in den Patenten US 5,945,491, US 5,854,364 und US 5,789,487 beschrieben.

Die mittleren Molekulargewichte M_{W} (Gewichtsmittel) der bei der kontrollierten radikalischen Polymerisation entstehenden Haftklebemassen werden derart gewählt, dass sie in einem Bereich von 50.000 und 1.500.000 liegen; speziell für die weitere Verwendung als Hitze-aktivierbare Klebebänder Haftklebemassen mit einem mittleren Molekulargewichten von 200.000 bis 1.000.000 hergestellt. Die Bestimmung des mittleren Molekulargewichtes erfolgt über Gelpermeationschromatographie (GPC) oder Matrix-unterstützte Laser-Desorption/Ionisations-Massenspektrometrie (MALDI-MS).

Die Polymerisation kann in Gegenwart eines organischen Lösungsmittels, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel oder Gemische von Lösungsmitteln sind reine Alkane (Hexan, Heptan, Octan, Isooctan), aromatische Kohlenwasserstoffe (Benzol, Toluol, Xylol), Ester (Essigsäureethylester, Essigsäurepropyl-, butyl-, oder hexylester), halogenierte Kohlenwasserstoffe (Chlorbenzol), Alkanole (Methanol, Ethanol, Ethylenglycol, Ethylenglycolmonomethylether) und Ether (Diethylether, Dibutylether) oder Gemische davon. Die wässerigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden aus der Gruppe gewählt, die aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon besteht.
Die Polymerisationszeit beträgt - je nach Umsatz und Temperatur - zwischen 4 und 48 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden. Für den Einsatz von UV-Initiatoren wird mit UV-Licht der geeigneten Wellenlänge eingestrahlt. Diese Reaktion kann in einem Temperaturbereich von 0 °C bis 150 °C durchgeführt werden.
Nachdem der Polymerisationsschritt beendet ist, kann das Reaktionsgemisch auf eine Temperatur unterhalb 60 °C, vorzugsweise auf Raumtemperatur, abgekühlt werden.

Für die klebtechnischen Eigenschaften kann es von Vorteil sein, die Hitze-aktivierbare Klebemasse zu vernetzen. Für eine UV-Vernetzung werden dann bevorzugt UV-Photoinitiatoren zugesetzt. Die Photoinitiatoren können vom Typ Norrish I oder Norrish II sein. Einige Gruppen von Photoinitiatoren seien im folgenden aufgezählt: Benzophenone, Acetophenone, Benzile, Benzoine, Hydroxyalkylphenone, Phenylcyclohexylketone, Anthrachinone, Trimethylbenzoylphosphinoxide, Methylthiophenylmorpholinketone, Aminoketone, Azobenzoine, Thioxanthone, Hexarylbisimidazole, Triazine oder Fluorenon, wobei jeder dieser Reste zusätzlich mit einem oder mehreren Halogenatomen und/oder einer oder mehreren Alkoxygruppen und/oder einer oder mehreren Aminogruppen oder Hydroxygruppen substituiert sein kann. Ein repräsentativer Überblick wird in "Photoinitiation Photopolymerization and Photocuring, Fundamentals and Applications, von J.-P. Fouassier, Hanser Publishers, München, Wien, New York 1995" gegeben. Ergänzend kann auf "Chemistry & Technology of UV & EB formulation for Coatings, Inks & Paints, Volume 5, A. Carroy, C. Decker. J.P. Dowling, P. Pappas, B. Monroe, ed. By P.K.T. Oldring, publ. By SITA Technology, London, England 1994" verwiesen werden.

Für den Fall, dass die Hitze-aktivierbare Haftklebemasse aus Lösung aufgetragen wird, kann es von Vorteil sein, dass sie 0,05 bis 3 Gew.-%, stärker bevorzugt 0,1 bis 2 Gew.-% Vernetzer, basierend auf dem Gewichtsanteil der Monomere der Klebemasse, enthält.

Der Vernetzer ist typischer Weise ein Metallchelat oder eine organische Verbindung, das/die mit einer funktionellen Gruppe eines Comonomers reagiert und somit direkt mit dem Polymer reagiert. Für die thermische Vernetzung sind weiterhin auch Peroxide geeignet. Für Säuregruppen-enthaltende Polymere können auch multifunktionelle Isocyanate und Epoxide eingesetzt werden.

Für die Verwendung der nach dem erfindungsgemäßen Verfahren hergestellten Poly(meth)acrylate als Hitze-aktivierbare Haftklebemassen werden die Polymere zur Optimierung optional mit zumindest einem Harz abgemischt. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Haftklebemasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren vorteilhaften Weiterentwicklung werden zu der Haftklebemasse ein oder mehrere Weichmacher, wie z. B. niedermolekulare Polyacrylate, Phthalate, polare Weichmacher auf Basis von Aminen oder Weichharze hinzudosiert.

Die Acrylathaftklebemassen können des weiteren mit einem oder mehreren Additiven wie Alterungsschutzmitteln, Lichtschutzmitteln, Ozonschutzmittein, Fettsäuren, Harzen, Keimbildnern, Blähmitteln, Compoundierungsmitteln und/oder Beschleunigern abgemischt sein.
Weiterhin können sie mit einem oder mehreren Füllstoffen wie Fasern, Ruß, Zinkoxid, Titandioxid, Voll- oder Hohlglas(mikro)kugeln, Mikrokugeln aus anderen Materialien, Kieselsäure, Silikaten und Kreide versetzt sein, wobei auch der Zusatz von blockierungsfreien Isocyanaten möglich ist.

Insbesondere für die Verwendung als Haftklebemasse ist es für das erfindungsgemäße Verfahren vorteilhaft, wenn das Polyacrylat bevorzugt aus der Schmelze auf einen Träger oder auf ein Trägermaterial als Schicht aufgebracht wird.

Hierfür werden die wie im vorhergehenden beschrieben hergestellten Hitze-aktivierbaren Poly(meth)acrylate zu einem Hotmelt aufkonzentriert, dessen Lösungsmittelgehalt ≤ 2 Gew.-% ist, besonders bevorzugt mit einem Lösungsmittelgehalt ≤ 0,5 Gew.-%. Dieser Prozeß findet bevorzugt in einem Aufkonzentrationsextruder statt. Die Klebemasse wird dann in einer günstigen Variante des Verfahrens als Heißschmelzmasse in Form einer Schicht auf einen Träger oder auf ein Trägermaterial aufgetragen.

Als Trägermaterialien für die Haftklebemasse, beispielsweise für Klebebänder, werden die dem Fachmann geläufigen und üblichen Materialien, wie Folien (Polyester, PET, FE, PP, BOPP, PVC), Vliese, Schäume, Gewebe und Gewebefolien sowie Trennpapier (Glassine, HDPE, LDPE) verwendet. Diese Aufzählung ist nicht abschließend.

Es ist für die Verwendung als Haftklebemasse besonders günstig, die Polyacrylate nach der Beschichtung auf den Träger oder auf das Trägermaterial zu vernetzen. Zur Herstellung der Haftklebebänder werden die oben beschriebenen Polymere hierzu optional mit Vernetzern abgemischt. Bevorzugte unter Strahlung vernetzende Substanzen gemäß dem erfindungsgemäßen Verfahren sind z. B. bi- oder multifunktionelle Acrylate oder bi-oder multifunktionelle Urethanacrylate, bi- oder multifunktionelle Isocyanate oder bi- oder multifunktionelle Epoxide. Einfache Beispiele hierfür sind 1,6-Hexandioldiacrylat, Pentaerythritoltetraacrylat, Trimethylolpropantriacrylat oder 1,2-Ethylenglycoldiacrylat. Verwendet werden können hier aber auch alle weiteren, dem Fachmann geläufigen bi- oder multifunktionellen Verbindungen, die in der Lage sind, Polyacrylate zu vernetzen.

Wenn die Hitze-aktivierbare Haftklebemasse UV-vernetzt werden sollte, so erfolgt dies durch ultraviolette Bestrahlung in einem Wellenlängenbereich von 200 bis 450 nm, insbesondere unter Verwendung von Quecksilber-Hochdruck- oder -Mitteldruck-Lampen bei einer Leistung von 80 bis 240 W/cm. Zur UV-Vernetzung kann aber auch monochromatische Strahlung in Form von Lasern verwendet werden. Um Überhitzungen zu vermeiden, kann es angebracht sein, den UV-Strahlengang teilweise abzuschatten. Weiterhin können spezielle Reflektorsysteme eingesetzt werden, die als Kaltlichtstrahler fungieren, um so Überhitzungen zu vermeiden.

Wenn auch nicht für das erfindungsgemäße Verfahren von Vorteil, so kann es angebracht sein, die erfindungsgemäßen Hitze-aktivierbaren Polymere mit Elektronenstrahlen auch zu vernetzen. Typische Bestrahlungsvorrichtungen, die zum Einsatz kommen könnten, stellen Linearkathodensysteme, Scannersysteme beziehungsweise Segmentkathodensysteme dar, sofern es sich um Elektronenstrahlbeschleuniger handelt. Eine ausführliche Beschreibung des Standes der Technik und der wichtigsten Verfahrensparameter findet man bei Skelhorne "Electron Beam Processing" in Vol. 1 "Chemistry & Technology of UV & EB Formulations for Coatings, Inks & Paints" publ. Sita Technology, London 1991. Die typischen Beschleunigungsspannungen liegen im Bereich zwischen 50 kV und 500 kV, vorzugsweise 80 kV bis 300 kV. Die angewandten Strahlungsdosen bewegen sich zwischen 5 bis 150 kGy, insbesondere 20 bis 100 kGy.

Im weiteren wird die Verwendung des nach dem erfindungsgemäßen Verfahren hergestellten Poly(meth)acrylates als Hitze-aktivierbare Haftklebemasse beansprucht.

Insbesondere ist die Verwendung der erfindungsgemäßen Haftklebemasse für ein Klebeband von Vorteil, wobei die Haftklebemasse ein- oder beidseitig auf einen Träger aufgetragen sein kann.

### Beispiele

### Testmethoden

Folgende Testmethoden wurden angewendet, um die Eigenschaften, insbesondere die klebtechnischen Eigenschaften der hergestellten Hitze-aktivierbaren Haftklebemassen zu evaluieren.

### 180°-Klebekrafttest (Test A)

Ein 20 mm breiter Streifen eines Klebebandes, das aus einer auf Polyester als Schicht aufgetragenen Hitze-aktivierbaren (Meth)acrylatklebemasse (50 g/m²) bestand, wurde auf Stahlplatten aufgebracht. Der Streifen wurde zweimal mit einem 2-kg-Gewicht auf das Substrat aufgedrückt. Das Klebeband wurde anschließend sofort mit 300 mm/min und im 180° Winkel vom Substrat abgezogen. Die Stahlplatten wurden zweimal mit Aceton und einmal mit Isopropanol gewaschen. Die Meßergebnisse sind in N/cm angegeben und sind gemittelt aus drei Messungen. Alle Messungen wurden bei Raumtemperatur und unter klimatisierten Bedingungen (23 °C und 50 % Luftfeuchtigkeit) durchgeführt.

### 180°-Klebekrafttest nach Hitze-Aktivierung (Test B)

Es wurde analog Test A vorgegangen. Die Verklebung wurde auf einer beheizbaren Klebkraft-Schiene vorgenommen, wobei hier eine Temperatur von 35 °C als Meßtemperatur gewählt wurde. Für die Durchführung der Anwendung wurde zuvor der Meßstreifen in einem Trockenschrank auf 35 °C vorgeheizt.

### Differential Scanning Calorimetry (DSC) (Test C)

Die DSC-Messungen wurden mit dem Gerät Mettler DSC 30 der Firma Mettler durchgeführt. Für die Messung wurden ca. 10 mg Probe eingewogen. Die Aufheizrate betrug 10 K pro Minute. Es wird unter Stickstoff-Atmosphäre gemessen. Es wurden zwei Aufheizkurven nacheinander aufgenommen, wobei nur die zweite Kurve ausgewertet wurde.

### Gelpermeationschromatographie GPC (Test D)

Die Bestimmung des mittleren Molekulargewichtes M_{W} und der Polydispersität PD erfolgte durch die Firma Polymer Standards Service in Mainz. Als Eluent wurde THF mit 0,1 Vol.-% Trifluoressigsäure eingesetzt. Die Messung erfolgte bei 25 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

### Herstellung von Bis-2,2'-phenylethyl-thiocarbonat

Die Synthese des Bis-2,2'-phenylethyl-thiocarbonates erfolgt ausgehend von 2-Phenylethylbromid mit Dischwefelkohlenstoff und Natriumhydroxid nach einer Vorschrift von Synth. Communications 18(13), S. 1531 - 1536, 1988. Ausbeute nach Destillation: 72%.
¹H-NMR (CDCl₃) δ (ppm) : 7,20 - 7,40 (m, 10 H), 1,53, 1,59 (2 x d, 6 H), 3,71, 381 (2 x m, 2 H).

### Polymerisationen

### Vergleichsbeispiel R1:

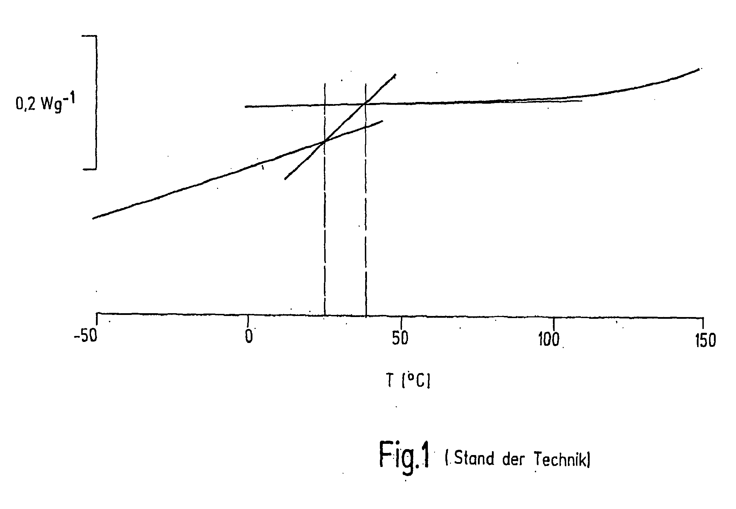

Ein für radikalische Polymerisationen konventioneller 2-L-Glasreaktor wurde mit 20 g Acrylsäure, 180 g Butylacrylat, 100 g tert.-Butylacrylat, 100 g Methylmethacrylat und 170 g Aceton befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 h wurde mit 100 g Aceton verdünnt. Zur Reduktion der Restinitiatoren wurden nach 5 und nach 7 h jeweils 1 g Bis-(4-tert.-butylcyclohexanyl)-peroxy-dicarbonat (Perkadox 16™, Fa Akzo Nobel) hinzugegeben. Die Reaktion wurde nach 24 h Reaktionszeit abgebrochen und auf Raumtemperatur abgekühlt. Das Polymer wurde nach Test D analysiert. Das DSC-Diagramm des Polymers ist in Fig. 1 gezeigt.

### Vergleichsbeispiel R2:

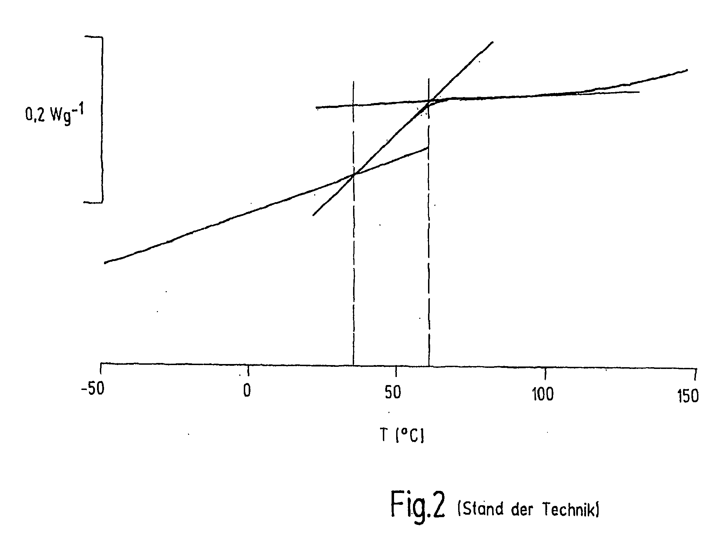

Ein für radikalische Polymerisationen konventioneller 2-L-Glasreaktor wurde mit 200 g 2-Ethylhexylacrylat, 80 g N,N-Dimethylacrylamid, 120 g Methylmethacrylat und 120 g Aceton befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 h wurde mit 100 g Aceton verdünnt. Zur Reduktion der Restinitiatoren wurden nach 5 und nach 7 h jeweils 1 g Bis-(4-tert.-butylcyclohexanyl)-peroxy-dicarbonat (Perkadox 16™, Fa Akzo Nobel) hinzugegeben. Die Reaktion wurde nach 24 h Reaktionszeit abgebrochen und auf Raumtemperatur abgekühlt. Das Polymer wurde nach Test D analysiert. Das DSC-Diagramm des Polymers ist in Fig. 2 gezeigt.

### Vergleichsbeispiel R3:

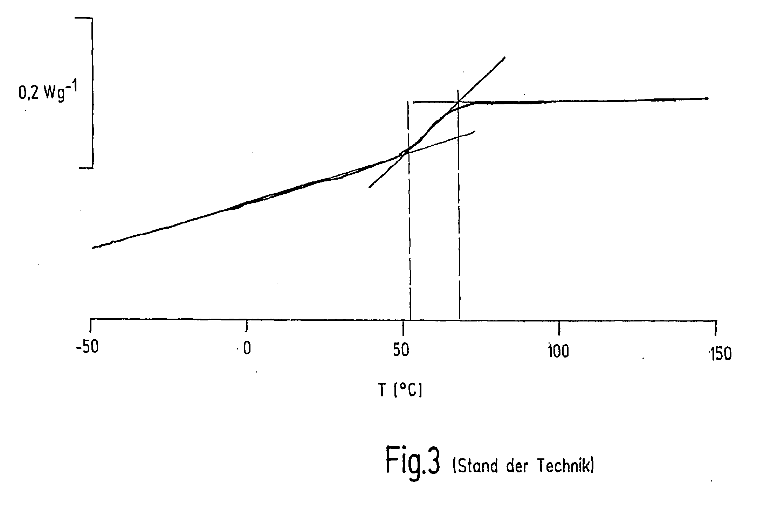

Ein für radikalische Polymerisationen konventioneller 2-L-Glasreaktor wurde mit 36 g Acrylsäure, 124 g Butylacrylat, 120 g tert.-Butylacrylat, 120 g Methylmethacrylat und 170 g Aceton befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 h wurde mit 100 g Aceton verdünnt. Zur Reduktion der Restinitiatoren wurden nach 5 und nach 7 h jeweils 1 g Bis-(4-tert.-butylcyclohexanyl)-peroxy-dicarbonat (Perkadox 16™, Fa Akzo Nobel) hinzugegeben. Die Reaktion wurde nach 24 h Reaktionszeit abgebrochen und auf Raumtemperatur abgekühlt. Das Polymer wurde nach Test D analysiert. Das DSC-Diagramm des Polymers ist in Fig. 3 gezeigt

### Beispiel 1:

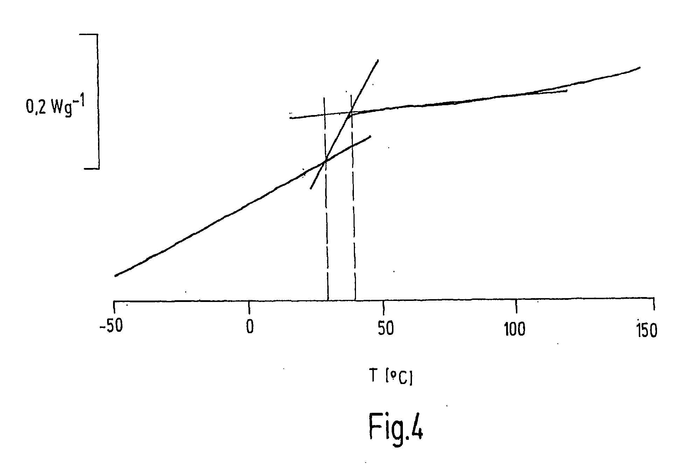

Ein für radikalische Polymerisationen konventioneller 2-L-Glasreaktor wurde mit 20 g Acrylsäure, 180 g Butylacrylat, 100 g tert.-Butylacrylat, 100 g Methylmethacrylat, 0,2 g Bis-2,2'-phenylethyl-thiocarbonat und 40 g Ethylacetat befüllt. Nach 45 Minuten Durchleiten von Stickstoffgas unter Rühren wurde der Reaktor auf 58 °C hochgeheizt und 0,15 g Azoisobutyronitril (AIBN, Vazo 64™, Fa. DuPont) hinzugegeben. Anschließend wurde das äußere Heizbad auf 80 °C erwärmt und die Reaktion konstant bei dieser Außentemperatur durchgeführt. Nach 8 h wurde mit 100 g Ethylacetat verdünnt. Nach 24 h Reaktionszeit wurden wiederum 0,15 g AIBN hinzugegeben. Nach 36 h wurde mit 100 g Ethylacetat verdünnt. Die Reaktion wurde nach 48 h Reaktionszeit abgebrochen und auf Raumtemperatur abgekühlt. Das Polymer wurde nach Test D analysiert. Das DSC-Diagramm des Polymers ist in Fig. 4 gezeigt.

### Beispiel 2:

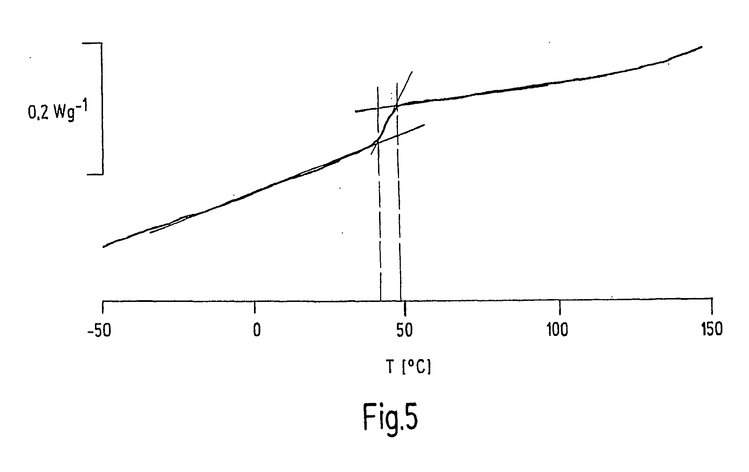

Ein für radikalische Polymerisationen konventioneller 2-L-Glasreaktor wurde mit 200 g 2-Ethylhexylacrylat, 80 g N,N-Dimethylacrylamid, 120 g Methylmethacrylat, 0,2 g Bis-2,2'-phenylethyl-thiocarbonat und 50 g Ethylacetat befüllt. Nach 45 Minuten Durchleiten von Stickstoffgas unter Rühren wurde der Reaktor auf 58 °C hochgeheizt und 0,15 g Azoisobutyronitril (AIBN, Vazo 64™, Fa. DuPont) hinzugegeben. Anschließend wurde das äußere Heizbad auf 80 °C erwärmt und die Reaktion konstant bei dieser Außentemperatur durchgeführt. Nach 8 h wurde mit 100 g Ethylacetat verdünnt. Nach 24 h Reaktionszeit wurden wiederum 0,15 g AIBN hinzugegeben. Nach 36 h wurde mit 100 g Ethylacetat verdünnt. Die Reaktion wurde nach 48 h Reaktionszeit abgebrochen und auf Raumtemperatur abgekühlt. Das Polymer wurde nach Test D analysiert. Das DSC-Diagramm des Polymers ist in Fig. 5 gezeigt.

### Beispiel 3:

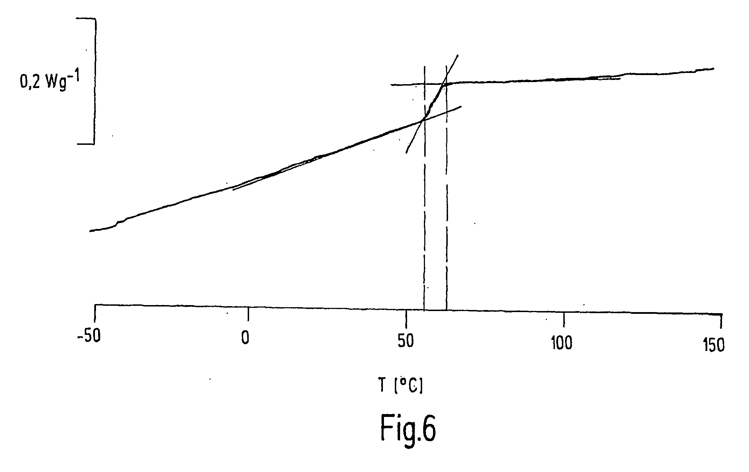

Ein für radikalische Polymerisationen konventioneller 2-L-Glasreaktor wurde mit 36 g Acrylsäure, 124 g Butylacrylat, 120 g tert.-Butylacrylat, 120 g Methylmethacrylat, 0,2 g Bis-2,2'-phenylethyl-thiocarbonat und 40 g Ethylacetat befüllt. Nach 45 Minuten Durchleiten von Stickstoffgas unter Rühren wurde der Reaktor auf 58 °C hochgeheizt und 0,15 g Azoisobutyronitril (AIBN, Vazo 64™, Fa. DuPont) hinzugegeben. Anschließend wurde das äußere Heizbad auf 80 °C erwärmt und die Reaktion konstant bei dieser Außentemperatur durchgeführt. Nach 8 h wurde mit 100 g Ethylacetat verdünnt. Nach 24 h Reaktionszeit wurden wiederum 0,15 g AIBN hinzugegeben. Nach 36 h wurde mit 100 g Ethylacetat verdünnt. Die Reaktion wurde nach 48 h Reaktionszeit abgebrochen und auf Raumtemperatur abgekühlt. Das Polymer wurde nach Test D analysiert. Das DSC-Diagramm des Polymers ist in Fig. 6 gezeigt.

### Ergebnisse

Als Referenzmuster wurden die Vergleichsbeispiele R1 bis R3 hergestellt. Die Vergleichsbeispiele wurden konventionell durch freie radikalische Polymerisation hergestellt. Im Vergleich hierzu wurden die Polymere 1, 2 und 3 über eine kontrollierte radikalische Polymerisation hergestellt. Alle Polymerisate wurden mit Test C analysiert. Die Ergebnisse sind in der folgenden Tabelle 1 angegeben:

**Tabelle 1**

| Beispiel | M_{W} [g/mol] | Polydispersität PD |
|---|---|---|
| R1 | 691000 | 4,5 |
| R2 | 723000 | 4,7 |
| R3 | 693000 | 4,8 |
| 1 | 386000 | 2,2 |
| 2 | 398000 | 2,0 |
| 3 | 365000 | 1,9 |

| | | |
|---|---|---|
| M_{W}: mittleres Molekulargewicht aus GPC PD: M_{W}/M_{N} = Polydispersität aus GPC | | |

Aus Tabelle 1 ist ersichtlich, dass die kontrolliert geführten radikalischen Polymerisationen eine bedeutend engere Molekulargewichtsverteilung (PD) liefern. Die Polydispersitäten der Vergleichsbeispiele liegen generell deutlich höher.

Im folgenden wurden die Glasübergangstemperaturen der einzelnen Beispiele mittels DSC bestimmt. Die Glasübergangstemperatur gibt die Temperatur an, an der bestimmte Polymerkettensegmente anfangen, sich zu bewegen, und die Haftklebemasse klebrig wird. Um nun eine möglichst enge Schalttemperatur für ein Hitze-aktivierbares Haftklebeband zu erreichen, sollte der Bereich der Glasübergangstemperatur möglichst eng sein. Ermittelt wird dieser Bereich aus den DSC-Meßwerten, wobei Ausgleichslinien durch die ansteigende Kurve vor und nach der Glasübergangstemperatur gelegt werden. Durch das Anlegen einer dritten Gerade an der Glasübergangstemperatur ergeben sich zwei Schnittpunkte, die zum einen mit dem Beginn der Erweichung und zum anderen mit dem Ende des Glasübergangstemperaturbereiches korrelieren. Vor dem Anfangspunkt und nach dem Endpunkt verändern sich die Eigenschaften des Polymers nicht mehr. Die einzelnen DSC-Diagramme der Vergleichsbeispiele R1 bis R3 und die Beispiele 1 bis 3 sind in den Figuren 1 bis 6 dargestellt. Die jeweiligen Glasübergangstemperaturen bzw. die Anfangs- und Endpunkte sind in der folgenden Tabelle 2 zusammengefaßt.

**Tabelle 2**

| Beispiel | DSC | Glasübergangstemperatur T_{G} | T_{Anfang} [°C] | T_{Ende} [°C] | ΔT |
|---|---|---|---|---|---|
| R1 | Figur 1 | 34,2 °C | 25,8 | 42,6 | 16,8 |
| R2 | Figur 2 | 49,3 °C | 36,5 | 62,0 | 25,5 |
| R3 | Figur 3 | 60,8 °C | 52,6 | 69,0 | 16,4 |
| 1 | Figur 4 | 35,5 °C | 30,7 | 40,2 | 9,5 |
| 2 | Figur 5 | 45,6 °C | 542,5 | 48,6 | 6,1 |
| 3 | Figur 6 | 60,6°C | 57,1 | 64,0 | 6,9 |

Der Tabelle 2 ist zu entnehmen, dass die Vergleichsbeispiele R1 bis R3 einen bedeutend größeren Temperaturaktivierungsbereich aufweisen. Die ermittelten Werte zeigen alle ein ΔT von größer 15 °C. Die engverteilten Hitze-aktivierbaren Haftklebemassen weisen dagegen einen Temperaturaktivierungsbereich ΔT von z. T. deutlich kleiner 15 °C auf (Beispiele 1 bis 3). Weiterhin kann der Tabelle 2 entnommen werden, dass durch die Wahl sowie der Zusammensetzung der Comonomere die Glasübergangstemperatur und somit auch die Aktivierungstemperatur gesteuert werden kann.

Der engere Aktivierungsbereich hat für industrielle Anwendungen oder im medizinischen Bereich große Vorteile, insbesondere, wenn temperaturempfindliche Substanzen verklebt werden, die einer maximalen Temperatur ausgesetzt werden können. Gerade im biologischen Bereich existieren für viele Verklebungen rund um die menschliche Haut natürliche Grenzen durch die Körpertemperatur. So sollte zur Repositionierbarkeit bei Raumtemperatur eine Verklebung nur eine möglichst geringe Klebkraft aufweisen und nach der Erwärmung die maximale Klebkraft möglichst schnell erreicht werden.

Im Hinblick auf diese Anwendung wurde für Vergleichsbeispiel R1 und Beispiel 1 die Klebkraft bei 23 °C und bei 35 °C gemessen. Die Ergebnisse sind in Tabelle 3 zusammengefaßt.

**Tabelle 3**

| Beispiel | KK-Stahl, 35 °C | KK-Stahl, 23 °C |
|---|---|---|
| | [N/cm] | [N/cm] |
| R1 | 3,3 | 0,6 |
| 1 | 3,4 | 0,2 |

| | | |
|---|---|---|
| KK: Klebkraft 50 g/m² Masseauftrag | | |

Tabelle 3 kann entnommen werden, dass das Vergleichsbeispiel R1 eine bedeutend höhere Klebkraft bereits unter Normbedingungen (23 °C, 50 % Luftfeuchtigkeit) aufweist. Durch die geringere Klebkraft von Beispiel 1 läßt sich diese Haftklebemasse deutlich besser repositionieren. Erwärmt man dagegen Beispiel 1 oder Vergleichsbeispiel 1, so besitzen beide bei höheren Temperaturen (35 °C) etwa die gleiche Klebkraft. Der Unterschied im Klebverhalten ist eine Folge des engeren Aktivierungsbereiches.

Neben der bereits beschriebenen medizinischen Anwendung existiert auch im industriellen Bereich eine Reihe von Verklebungen, die eine gute Repositionierbarkeit bei Raumtemperatur und eine erhöhte Klebkraft bei Prozeßbedingungen erfordern. Diese Anwendungen sind in vielen Fällen nicht permanente Verklebungen, d. h. die Verklebung wird am Ende des Prozesses wieder aufgelöst. In den meisten Fällen wird gewünscht, dass für die Auflösung der Verklebung ein möglichst geringer Kraftaufwand benötigt wird. Dies ist ebenfalls eine sehr bevorzugte Anwendung für die erfindungsgemäßen Hitze-aktivierbaren Haftklebemassen.

## Patentansprüche

1. Hitze-aktivierbare Haftklebemasse, umfassend ein Polymer oder Copolymer aus einer Monomerzusammensetzung, die zumindest 50 Gew.-% einer Verbindung der Formel CH₂=C(R₁)(COOR₂) umfaßt, wobei R₁ H oder CH₃ darstellt und R₂ H oder eine Alkylkette mit 1 bis 30 Kohlenstoffatomen darstellt, wobei das Polymer oder Copolymer
eine statische Glasübergangstemperatur von -10 °C bis 120 °C aufweist;
einen Temperaturaktivierungsbereich von 15 °C oder weniger aufweist; und
eine Molekulargewichtsverteilung M_{W}/M_{N} von 2,5 oder weniger aufweist.

2. Hitze-aktivierbare Haftklebemasse nach Anspruch 1, **dadurch gekennzeichnet, dass** die Monomerzusammensetzung
(a1) 10 bis 85 Gew.-% eines Acrylat- oder Methacrylatesters eines nicht-tertiären Alkohols, dessen Homopolymer eine statische Glasübergangstemperatur von 0 °C oder weniger aufweist;
(a2) 0 bis 70 Gew.-% eines Acrylat- oder Methacrylatesters eines Alkohols, dessen Homopolymer eine statische Glasübergangstemperatur von mindestens 50 °C aufweist; und
(a3) 5 bis 50 Gew.-% eines Monomers, das eine polare funktionelle Gruppe trägt;
umfaßt.

3. Hitze-aktivierbare Haftklebemasse nach Anspruch 2, **dadurch gekennzeichnet, dass** die Komponenten (a1) und (a2) unabhängig voneinander aus einer Gruppe ausgewählt sind, die Acryl- und Methacrylsäureester umfaßt, die jeweils Alkylgruppen mit 4 bis 9 Kohlenstoffatomen aufweisen.

4. Hitze-aktivierbare Haftklebemasse nach Anspruch 2 oder Anspruch 3, **dadurch gekennzeichnet, dass** die Komponenten (a1) und (a2) unabhängig voneinander aus einer Gruppe ausgewählt sind, die Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat und deren verzweigten Isomere umfaßt.

5. Hitze-aktivierbare Haftklebemasse nach einem der Ansprüche 2 bis 4, **dadurch gekennzeichnet, dass** die Komponente (a2) aus einer Gruppe ausgewählt ist, die monofunktionelle Acrylate und Methacrylate von überbrückten substituierten oder unsubstituierten Cycloalkylalkoholen umfaßt, die zumindest 6 Kohlenstoffatome aufweisen.

6. Hitze-aktivierbare Haftklebemasse nach einem der Ansprüche 2 bis 5, **dadurch gekennzeichnet, dass** die Komponente (a2) aus einer Gruppe ausgewählt ist, die Cyclohexylmethacrylate, Isobornylacrylat, Isobornylmethacrylate und 3,5-Dimethyladamantylacrylat umfaßt.

7. Hitze-aktivierbare Haftklebemasse nach einem der Ansprüche 2 bis 6, **dadurch gekennzeichnet, dass** die polare Gruppe der Komponente (a3) eine Carboxyl-, Sulfonsäure-, Phosphonsäure-, Hydroxy-, Lactam-, Lacton-, N-substituierte Amid-, N-substituierte Amin-, Carbamat-, Epoxy-, Thiol-, Ether-, Alkoxy- oder Cyan-Gruppe ist.

8. Hitze-aktivierbare Haftklebemasse nach einem der vorstehenden Ansprüche, **dadurch gekennzeichnet, dass** das Polymer oder Copolymer eine statische Glasübergangstemperatur von 0 °C bis 100 °C aufweist.

9. Verfahren zur Herstellung einer Hitze-aktivierbaren Haftklebemasse nach einem der Ansprüche 1 bis 8, **dadurch gekennzeichnet, dass** die Monomerzusammensetzung durch kontrollierte radikalische Polymerisation polymerisiert wird.

10. Verwendung einer Hitze-aktivierbaren Haftklebemasse nach einem der Ansprüche 1 bis 8 für ein Klebeband.

11. Verwendung nach Anspruch 10, **dadurch gekennzeichnet, dass** die Haftklebemasse auf eine oder beide Seiten eines Trägers beschichtet ist.

## Claims

1. Heat-activable pressure-sensitive adhesive comprising a polymer or copolymer formed from a monomer composition comprising at least 50% by weight of a compound of the formula CH₂=C(R₁)(COOR₂), wherein R₁ represents H or CH₃ and R₂ represents H or an alkyl chain having 1 to 30 carbon atoms, the polymer or copolymer having
a static glass transition temperature of -10°C to 120°C;
a temperature activation range of 15°C or less; and
a molecular weight distribution M_{w}/Mₙ of 2.5 or less.

2. Heat-activable pressure-sensitive adhesive according to Claim 1, **characterized in that** the monomer composition comprises
(a1) 10% to 85% by weight of an acrylate or methacrylate ester of a non-tertiary alcohol, whose homopolymer has a static glass transition temperature of 0°C or less;
(a2) 0% to 70% by weight of an acrylate or methacrylate ester of an alcohol, whose homopolymer has a static glass transition temperature of at least 50°C; and
(a3) 5% to 50% by weight of a monomer which carries a polar functional group.

3. Heat-activable pressure-sensitive adhesive according to Claim 2, **characterized in that** components (a1) and (a2) are selected independently of one another from a group which embraces acrylic and methacrylic esters each having alkyl groups of 4 to 9 carbon atoms.

4. Heat-activable pressure-sensitive adhesive according to Claim 2 or Claim 3, **characterized in that** components (a1) and (a2) are selected independently of one another from a group which embraces methyl acrylate, methyl methacrylate, ethyl acrylate, n-butyl acrylate, n-butyl methacrylate, n-pentyl acrylate, n-hexyl acrylate, n-heptyl acrylate, n-octyl acrylate, n-octyl methacrylate, n-nonyl acrylate, lauryl acrylate, stearyl acrylate, behenyl acrylate, and the branched isomers thereof.

5. Heat-activable pressure-sensitive adhesive according to any one of Claims 2 to 4, **characterized in that** component (a2) is selected from a group which embraces monofunctional acrylates and methacrylates of bridged substituted or unsubstituted cycloalkyl alcohols having at least 6 carbon atoms.

6. Heat-activable pressure-sensitive adhesive according to any one of Claims 2 to 5, **characterized in that** component (a2) is selected from a group which embraces cyclohexyl methacrylates, isobornyl acrylate, isobornyl methacrylates, and 3,5-dimethyladamantyl acrylate.

7. Heat-activable pressure-sensitive adhesive according to any one of Claims 2 to 6, **characterized in that** the polar group of component (a3) is a carboxyl, sulfonic acid, phosphonic acid, hydroxyl, lactam, lactone, N-substituted amide, N-substituted amine, carbamate, epoxy, thiol, ether, alkoxy or cyano group.

8. Heat-activable pressure-sensitive adhesive according to any one of the preceding claims, **characterized in that** the polymer or copolymer has a static glass transition temperature of 0°C to 100°C.

9. Process for preparing a heat-activable pressure-sensitive adhesive according to any one of Claims 1 to 8, **characterized in that** the monomer composition is polymerized by controlled free-radical addition polymerization.

10. Use of a heat-activable pressure-sensitive adhesive according to any one of Claims 1 to 8 for an adhesive tape.

11. Use according to Claim 10, **characterized in that** the pressure-sensitive adhesive is coated onto one or both sides of a carrier.

## Revendications

1. Matière autoadhésive activable par la chaleur, comprenant un polymère ou copolymère à base d'une composition de monomères qui comprend au moins 50 % en poids d'un composé de formule CH₂=C(R₁)(COOR₂), R₁ représentant H ou CH₃ et R₂ représentant H ou une chaîne alkyle ayant de 1 à 30 atomes de carbone, dans laquelle le polymère ou copolymère
présente une température de transition vitreuse statique de -10 °C à 120 °C ;
présente un domaine d'activation par la température de 15 °C ou moins ; et
présente une distribution de masse moléculaire M_{w}/Mₙ de 2,5 ou moins.

2. Matière autoadhésive activable par la chaleur selon la revendication 1, **caractérisée en ce que** la composition de monomères comprend
(a1) 10 à 85 % en poids d'un ester acrylate ou méthacrylate d'un alcool non tertiaire, dont l'homopolymère présente une température de transition vitreuse statique de 0 °C ou moines ;.
(a2) 0 à 70 % en poids d'un ester acrylate ou méthacrylate d'un alcool dont l'homopolymère présente une température de transition vitreuse statique d'au moins 50 °C ; et
(a3) 5 à 50 % en poids d'un monomère qui porte un groupe fonctionnel polaire.

3. Matière autoadhésive activable par la chaleur selon la revendication 2, **caractérisée en ce que** les composants (a1) et (a2) sont choisis, indépendamment l'un de l'autre, dans un groupe qui comprend les esters d'acide acrylique et d'acide méthacrylique, qui comportent chacun des groupes alkyle ayant de 4 à 9 atomes de carbone.

4. Matière autoadhésive activable par la chaleur selon la revendication 2 ou la revendication 3, **caractérisée en ce que** les composants (a1) et (a2) sont choisis, indépendamment l'un de l'autre, dans un groupe qui comprend l'acrylate de méthyle, le méthacrylate de méthyle, l'acrylate d'éthyle, l'acrylate de n-butyle, le méthacrylate de n-butyle, l'acrylate de n-pentyle, l'acrylate de n-hexyle, l'acrylate de n-heptyle, l'acrylate de n-octyle, le méthacrylate de n-octyle, l'acrylate de n-nonyle, l'acrylate de lauryle, l'acrylate de stéaryle, l'acrylate de béhényle et leurs isomères ramifiés.

5. Matière autoadhésive activable par la chaleur selon l'une quelconque des revendications 2 à 4, **caractérisée en ce que** le composant (a2) est choisi dans un groupe qui comprend des acrylates et méthacrylates monofonctionnels d'alcools cycloalkyliques pontés, substitués ou non substitués qui comportent au moins 6 atomes de carbone.

6. Matière autoadhésive activable par la chaleur selon l'une quelconque des revendications 2 à 5, **caractérisée en ce que** le composant (a2) est choisi dans un groupe qui comprend le méthacrylate de cyclohexyle, l'acrylate d'isobornyle, le méthacrylate d'isobornyle et l'acrylate de 3,5-diméthyladamantyle.

7. Matière autoadhésive activable par la chaleur selon l'une quelconque des revendications 2 à 6, **caractérisée en ce que** le groupe polaire du composant (a3) est un groupe carboxy, sulfo, phosphono, hydroxy, lactame, lactone, amido N-substitué, amino N-substitué, carbamate, époxy, thiol, éther, alcoxy ou cyano.

8. Matière autoadhésive activable par la chaleur selon l'une quelconque des revendications précédentes, **caractérisée en ce que** le polymère ou copolymère présente une température de transition vitreuse statique de 0 °C à 100 °C.

9. Procédé pour la préparation d'une matière autoadhésive activable par la chaleur selon l'une quelconque des revendications 1 à 8, **caractérisée en ce que** la composition de monomères est polymérisée par polymérisation radicalaire contrôlée.

10. Utilisation d'une matière autoadhésive activable par la chaleur selon l'une quelconque des revendications 1 à 8, pour un ruban adhésif.

11. Utilisation selon la revendication 10, **caractérisée en ce que** la matière autoadhésive est appliquée sur une face ou sur les deux d'un support.
